# EUROPEAN PATENT APPLICATION

(11) **EP 2 863 040 A1**
(43) Date of publication of application: **22.04.2015**
(21) Application number: 14188954.3
(22) Date of filing: 15.10.2014
(51) Int. Cl.: F02K 1/72

(54) **Thrust reverser fan ramp partially formed on aft end of fan case**

(30) Priority: 18.10.2013 US 201314058118
(71) Applicant: Rohr, Inc., Chula Vista, CA 91910-2098 (US)
(72) Inventor: Aten, Michael, San Diego, CA California 92129 (US)
(74) Representative: Leckey, David Herbert

(57) **Abstract**

A fan ramp (105; 502) aerodynamically guides bypass duct air from the aft end (408) of the fan case (202; 302) to the forward end of cascades (112; 412). To improve packaging of a thrust reverser assembly (400), the fan ramp (105; 502) begins on the interior (410b) of the fan case (202; 302) and continues onto the structure surrounding the cascade (112; 412).

## Description

### FIELD

The present disclosure relates to nacelles for turbofan aircraft propulsion systems, and more particularly to thrust reverser assemblies for the same.

### BACKGROUND

Nacelles for turbofan aircraft propulsion systems (such as those that power modem commercial airliners) typically include thrust reversing assemblies. Thrust reversers typically include one or more cascades which guide fan air out of the thrust reverser in an outward and forward direction to generate reverse thrust. The fan air flows within a duct formed by the nacelle and surrounding the engine. During thrust reverser deployment, the fan air is blocked within the duct and turned toward the cascades with the help of blocker doors.

In response to a thrust reverser being in the stowed position, it is typically desirable to have aerodynamic surfaces that follow an "ideal" path. In response to thrust reverser deployment, however, it is desirable to conduct air through the cascades instead of through the aft portion of the duct and into aft components of a nacelle, such as a nozzle. Conventional structures tend to conduct air less efficiently through the cascades during thrust reverser deployment.

### SUMMARY

An aircraft propulsion system is disclosed. The aircraft propulsion system may comprise an annular fan case that houses a fan, the fan case comprising a radially interior surface and a radially exterior surface, the radially interior surface of the fan case deviating radially outward from an ideal loft surface that begins forward of an aft end of the fan case such that the fan case comprises a portion of a fan ramp. The fan ramp may aerodynamically guide air in a bypass air duct to a forward portion of a cascade. The ideal loft surface may be defined as a line extending between a portion of the fan case that is forward of an axial end of the fan case and a forward portion of a blocker door. The radially interior surface of the fan case may be curved. The radially interior surface of the fan case may curve radially outward to form a portion of the fan ramp. The aircraft propulsion system may further comprise a thrust reverser assembly that includes the cascade and a torque box at least partially surrounding the cascade and supporting the cascade. The aircraft propulsion system may further comprise a gas turbine engine. The bypass duct may be formed around a gas turbine engine. The aircraft propulsion system may further comprise a fan that drives air through the bypass duct. The aircraft propulsion system may further comprise a translating sleeve comprising a portion of a thrust reversing assembly that may be shifted aft to expose the fan ramp to a bypass air duct.

An aircraft propulsion system is disclosed. The aircraft propulsion system may comprise a gas turbine engine, a bypass air duct formed around the engine, a fan coupled to the engine that drives bypass air through the bypass air duct, an annular fan case located radially external of the fan with a radially interior surface defining at least in part the bypass duct, a thrust reverser assembly including a cascade and torque box at least partially surrounding the cascade and supporting it, and/or a fan ramp including a continuously curved aerodynamic surface extending from a point forward of an aft end of the interior surface of the fan case to the forward portion of the cascade and which aerodynamically guides air in the bypass duct from the fan case to the cascade forward portion, and, wherein the fan ramp is formed at least in part on the fan case. The radially interior surface of the fan case may deviate radially outward from an ideal loft surface that begins forward of an aft end of the fan case such that the fan case comprises a portion of the fan ramp. The ideal loft surface may be defined, in cross-section, as a line extending between a portion of the fan case that is forward of an axial end of the fan case and a forward portion of a blocker door. The radially interior surface of the fan case may be curved. The radially interior surface of the fan case may curve radially outward to form a portion of the fan ramp. The aircraft propulsion system may further comprise an inner fixed structure formed about the gas turbine engine and defining at least in part the bypass duct. The aircraft propulsion system may further comprise a translating sleeve comprising a portion of a thrust reversing assembly that may be shifted aft to expose the fan ramp to the bypass air duct. The translating sleeve may be shifted forward to cover the fan ramp.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Figure 1A illustrates a schematic cross-sectional view of a prior art aircraft propulsion system having a thrust reversing assembly in a stowed position;
Figure 1B illustrates a schematic cross-sectional view of a prior art aircraft propulsion system having a thrust reversing assembly in a deployed position;
Figure 2 illustrates a schematic cross-sectional view of a prior art aircraft propulsion system fan ramp;
Figure 3 illustrates, in accordance with various embodiments, a perspective cutaway view of an aircraft propulsion system having a fan ramp partially formed on an aft end of a fan case;
Figure 4 illustrates, in accordance with various embodiments, a schematic cross-sectional view of an aircraft propulsion system having a fan ramp partially formed on an aft end of a fan case, wherein the thrust reversing assembly is stowed; and
Figure 5 illustrates, in accordance with various embodiments, a schematic cross-sectional view of an aircraft propulsion system having a fan ramp partially formed on an aft end of a fan case, wherein the thrust reversing assembly is deployed.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical, chemical and mechanical changes may be made without departing from the spirit and scope of the inventions. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

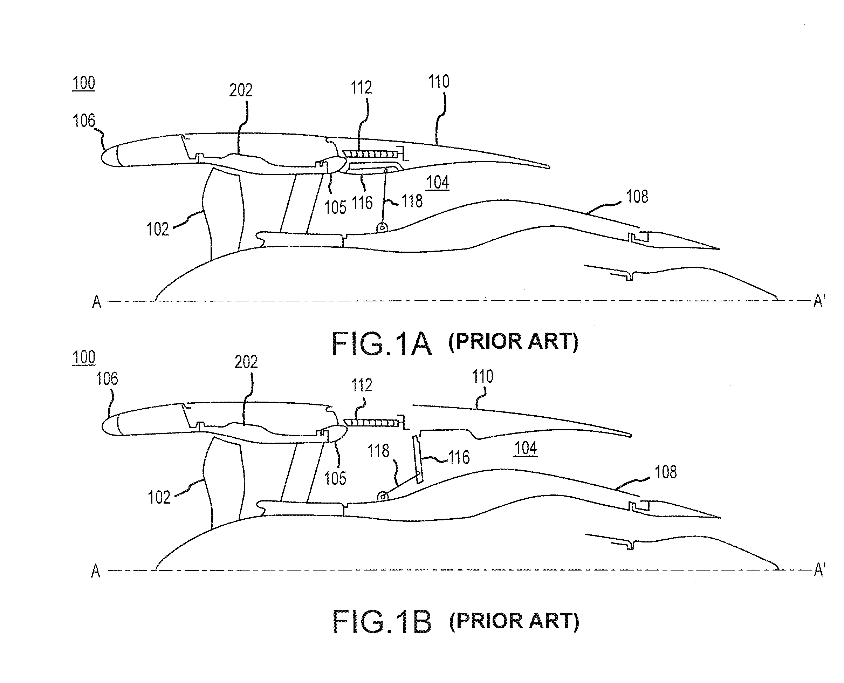

As used herein, "aft" refers to the direction associated with the tail (e.g., the back end) of an aircraft, or generally, to the direction of exhaust of the gas turbine. As used herein, "forward" refers to the directed associated with the nose (e.g., the front end) of an aircraft, or generally, to the direction of flight or motion. For example, with reference to Figure 1, point A is forward of point A' along axis A-A'.

With reference now to Figure 1A, a partial cross-section of a jet aircraft propulsion system nacelle 100 is shown. The nacelle 100 may extend from forward to aft along the axis A-A'. In flight, air from point A may flow around and/or through the propulsion system 100 in the direction from point A to point A'.

The nacelle 100 may generally function to package a gas turbine engine and a fan or turbofan 102, and may guide air around the external portion of the nacelle 100 and internally through the nacelle 100 to define the bypass duct 104.

The nacelle 100 may include an air inlet 106 through which air may enter the nacelle 100. Some portion of airflow may enter the gas turbine engine, and some portion of airflow may flow through the bypass air duct 104. An inner fixed structure ("IFS") 108 may define an inner airflow surface of the bypass air duct 104 and may be disposed coaxially about the gas turbine engine. The gas turbine engine may burn a hydrocarbon fuel in the presence of compressed air to generate exhaust gas. The exhaust gas may drive a turbine, which may, through a shaft, drive the turbofan 102 at the forward portion of the nacelle 100. The turbofan 102 may rotate to generate bypass fan airflow in a bypass air duct 104.

The nacelle 100 may further comprise a thrust reversing assembly or a thrust reverser. The thrust reversing assembly may comprise a plurality of thrust reversing components, including, for example, a translating sleeve 110, a cascade 112, one or more blocker doors 116, and/or one or more drag links 118. The blocker door 116 may be coupled to the IFS 108 by the drag link 118.

Generally, with reference to Figure 1B, during a thrust reversing operation, the blocker door 116 may deploy from a stowed position to block bypass air flowing through the bypass air duct 104. In particular, the translating sleeve 110 may translate aft. As the translating sleeve 110 moves aft, the blocker door 116, which is coupled to the translating sleeve 110, may translate after as well. The drag link 118 may, however, remain fixed to the IFS 108.

Thus, as the blocker door 116 translates aft with the translating sleeve 110, the drag link 118 may pull the blocker door 116 radially inward into a deployed position. As shown, in a deployed position, the blocker door 116 may project radially within the bypass duct 104 to block at least a portion of the fan air flow in the bypass air duct 104.

As air enters the bypass air duct 104, a curved structure or "fan ramp" 105 may channel air into the cascade 112. The blocker door 116 may, in addition, redirect fan air into the cascade 112. The cascade 112 may therefore channel fan air out of the nacelle 100 in a forward direction to generate reverse thrust.

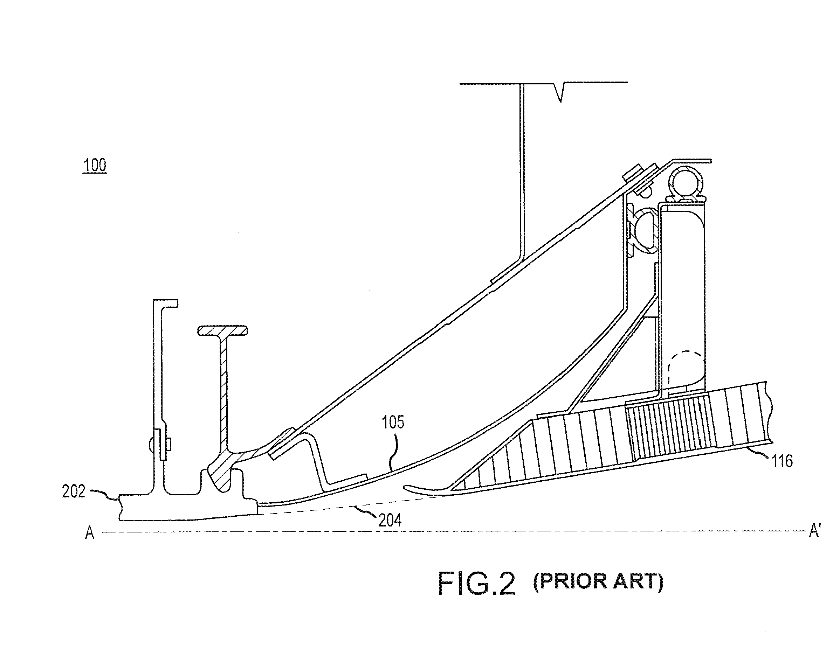

With reference to Figure 2, a portion of a prior art nacelle 100 is shown in greater detail. Specifically, a prior art fan case 202, fan ramp 105, and blocker door 116 are shown. In general, the fan case 202 may comprise an annular or cylindrical structure that surrounds the engine core. The fan case 202 may therefore comprise an inner surface and an outer surface. Moreover, the inner surface may comprise a constant (or substantially constant) radius. Thus, the inner surface of the fan case 202 may not include a curvature (or only a slight curvature, such as less than 5 degrees).

As discussed above, fan case design has conventionally held that a fan case should conform to a perfect aerodynamic (or "loft") surface of the fan duct 104. A perfect loft surface is illustrated in Figure 2 and is identified by the reference number 204. A perfect loft surface 204 may comprise an ideal aerodynamic surface over which air would flow to achieve maximum efficiency. However, to move air from the duct through the cascades in response to thrust reverser deployment, fan ramp 105 deviates from the perfect loft surface 204. A fan ramp may be defined as beginning at the forward most point at which a surface of a duct deviates from the perfect loft surface 204. For example, a fan case that follows ideal loft surface 204 and a radial departure from the ideal loft surface 204 at the fan ramp 105 may define, in the prior art, the forward most portion of a fan ramp 105.

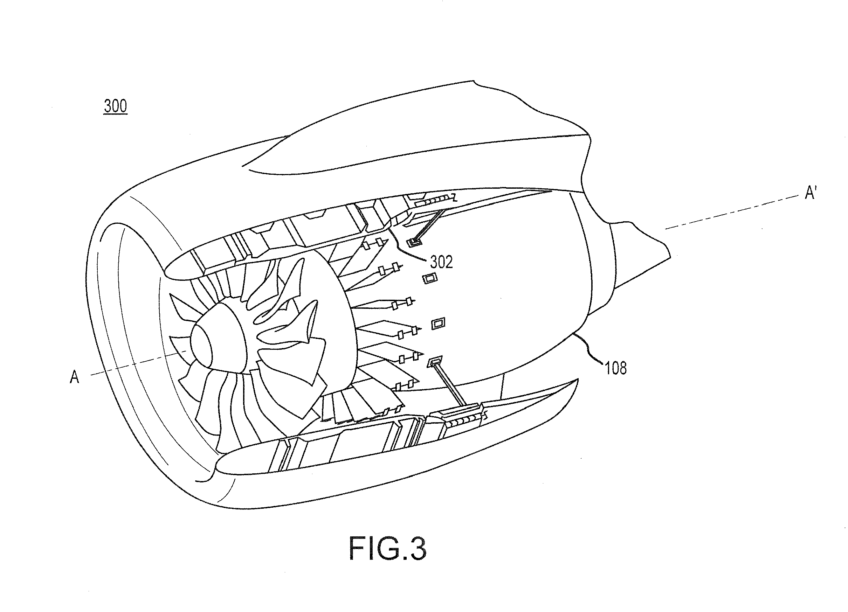

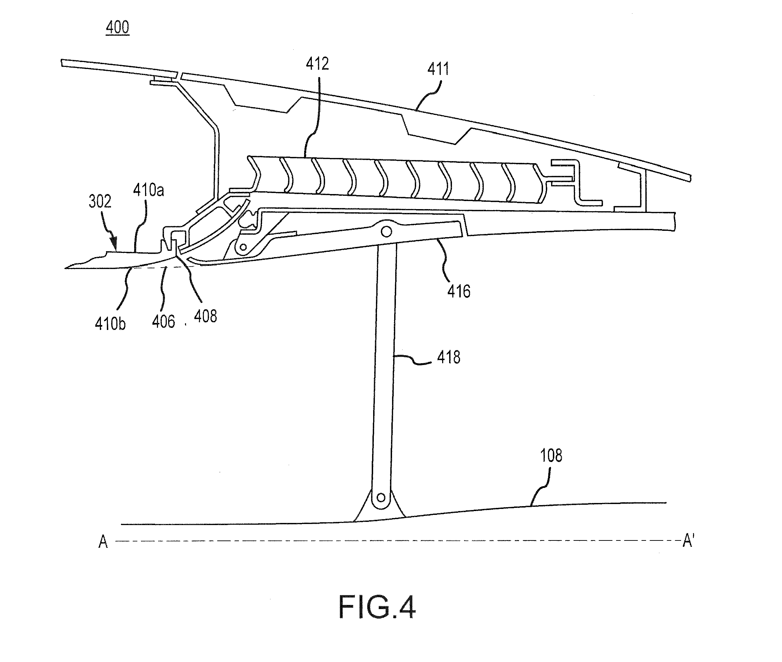

Now, as shown with reference to Figures 3-5, a perspective view of a partially cutaway nacelle 300 is shown. The nacelle 300 may include a cascade 412, a blocker door 416, a drag link 418, an IFS 108, and/or a fan cowl translating sleeve 411. In addition, unlike the nacelle 100 described above, the nacelle 300 may comprise a fan case 302 having a curvature. More particularly, the fan case 302 may comprise a radially interior surface 410b and a radially exterior surface 410a. The radially interior surface 410b of the fan case 302 may deviate (or begin to curve radially outward) from an ideal loft surface 406 that begins forward of an aft end 408 of the fan case 302. In this manner, the fan case 302 may contribute to the curvature of a fan ramp 502. Stated another way, in various embodiments, a fan ramp's forward most point is the forward most point where a duct deviates from the ideal loft surface 406. As shown in FIG. 4, radially interior surface 410b of fan case 302 deviates from the ideal loft surface 406 and, accordingly, radially interior surface 410b of fan case 302 comprises a portion of a fan ramp.

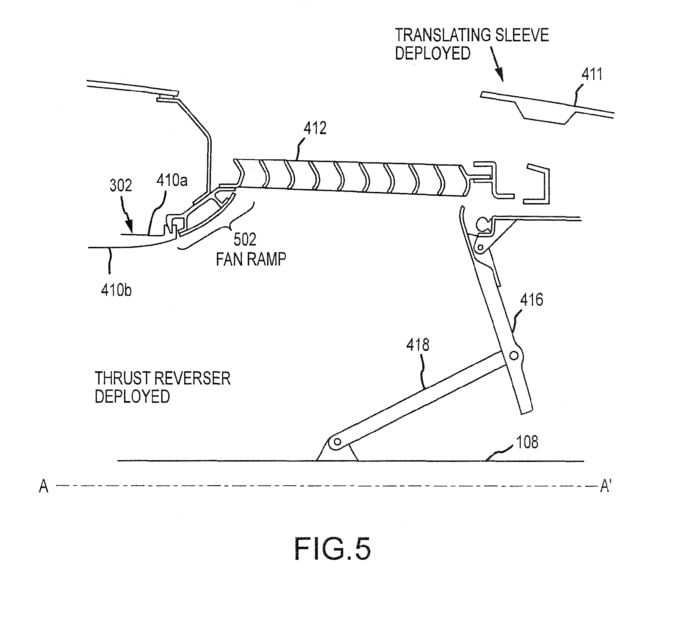

Again, as shown in greater detail with respect to Figures 4 and 5 (showing a thrust reversing assembly 400 in a stowed and deployed configuration, respectively), the fan case 302 may terminate at an aft end 408 that is aft of a deviation of the radially interior surface 410b of the fan case 302 from the perfect loft surface 406. Thus, the fan can case 302 may contribute to the curvature of the fan ramp 502. In other words, the fan ramp 502 may be shared with the fan case 302.

As a result of the fan ramp 502 sharing described above, a variety of system components (e.g., a torque box, the cascade 412, and the like) may be allowed to occupy a more forward portion of the nacelle 300 (in comparison to the nacelle 100). In addition, as the fan ramp 502 occupies a more forward position than is conventional, a torque box may also occupy a more forward position than is conventional and/or its dimensions (in particular its width) reduced during construction. The aerodynamic geometry of the nacelle 300 may be improved over that associated with the nacelle 100 as well. For example, the nacelle 300 may sweep more steeply aft than the nacelle 100.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Different cross-hatching is used throughout the figures to denote different parts but not necessarily to denote the same or different materials. Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An aircraft propulsion system comprising:
an annular fan case (202; 302) that houses a fan (102), the fan case (202; 302) comprising a radially interior surface (410b) and a radially exterior surface (410a), the radially interior surface (410b) of the fan case (202; 302) deviating radially outward from an ideal loft surface (406) that begins forward of an aft end (408) of the fan case (202; 302) such that the fan case (202; 302) comprises a portion of a fan ramp (105; 502).

2. The aircraft propulsion system of claim 1, wherein the fan ramp aerodynamically guides air in a bypass air duct to a forward portion of a cascade.

3. The aircraft propulsion system of claim 1 or 2, wherein the ideal loft surface (406) is defined as a line extending between a portion of the fan case (202; 302) that is forward of an axial end of the fan case (105; 502) and a forward portion of a blocker door (116; 416).

4. The aircraft propulsion system of claim 1, 2 or 3, further comprising a thrust reverser assembly (400) that includes a or the cascade (112; 412) and a torque box at least partially surrounding the cascade (112; 412) and supporting the cascade (112; 412).

5. The aircraft propulsion system of any preceding claim, further comprising a gas turbine engine.

6. The aircraft propulsion system of any preceding claim, wherein a or the bypass duct (104) is formed around a or the gas turbine engine.

7. The aircraft propulsion system of any preceding claim, further comprising a fan (102) that drives air through a or the bypass duct (104).

8. An aircraft propulsion system comprising:
a gas turbine engine;
a bypass air duct (104) formed around the engine;
a fan (102) coupled to the engine that drives bypass air through the bypass air duct (104);
an annular fan case (202; 302) located radially external of the fan (102) with a radially interior surface (410b) defining at least in part the bypass duct (104);
a thrust reverser assembly (400) including a cascade (112; 412) and torque box at least partially surrounding the cascade (112; 412) and supporting it; and
a fan ramp (105; 502) including a continuously curved aerodynamic surface extending from a point forward of an aft end (408) of the interior surface of the fan case (202; 302) to the forward portion of the cascade (112; 412) and which aerodynamically guides air in the bypass duct (104) from the fan case (202; 302) to the cascade (112; 412) forward portion, and, wherein the fan ramp (105; 502) is formed at least in part on the fan case (202; 302).

9. The aircraft propulsion system of claim 8, wherein the radially interior surface (410b) of the fan case (202; 302) deviates radially outward from an ideal loft surface (406) that begins forward of an aft end (408) of the fan case (202; 302) such that the fan case (202; 302) comprises a portion of the fan ramp (105; 502).

10. The aircraft propulsion system of claim 9, wherein the ideal loft surface (406) is defined, in cross-section, as a line extending between a portion of the fan case (202; 302) that is forward of an axial end of the fan case (202; 302) and a forward portion of a blocker door (116; 416).

11. The aircraft propulsion system of any preceding claim, wherein the radially interior surface (410b) of the fan case (202; 302) is curved.

12. The aircraft propulsion system of any preceding claim, wherein the radially interior surface (410b) of the fan case (202; 302) curves radially outward to form a portion of the fan ramp (105; 502).

13. The aircraft propulsion system of any preceding claim, wherein a translating sleeve (110; 411) comprising a portion of a or the thrust reversing assembly (400) is shifted aft to expose the fan ramp (105; 502) to a or the bypass air duct (104).

14. The aircraft propulsion system of any preceding claim, further comprising an inner fixed structure (108) formed about a or the gas turbine engine and defining at least in part the bypass duct (104).

15. The aircraft propulsion system of any preceding claim, wherein a or the translating sleeve (110; 411) is shifted forward to cover the fan ramp (105; 502).
